# NOUVEAU FASCICULE DE BREVET EUROPEEN

(11) **EP 3 017 669 B2**
(45) Date de publication et mention de la décision concernant l'opposition: **18.11.2020**
(45) Mention de la délivrance du brevet: 28.06.2017
(21) Numéro de dépôt: 15193802.4
(22) Date de dépôt: 10.11.2015
(51) Int. Cl.: A01B 29/04, A01C 5/06

(54) **ROUE AGRICOLE AMELIOREE**
VERBESSERTES RAD FÜR LANDWIRTSCHAFTLICHE VERWENDUNG
IMPROVED AGRICULTURAL WHEEL

(30) Priorité: 10.11.2014 FR 1460860
(43) Date de publication de la demande: 11.05.2016
(73) Titulaire: OTICO, 77650 Chalmaison (FR)
(72) Inventeur: PIOU, M. Denis, 89340 VILLEBLEVIN (FR)
(74) Mandataire: Cabinet Netter

(56) Documents cités:
- EP-A1- 0 299 190
- EP-A1- 2 000 328
- EP-A1- 2 000 328
- EP-A2- 0 100 013
- EP-B2- 0 223 134
- EP-B2- 0 245 648
- DE-A1- 1 605 629
- DE-A1-102007 049 767
- DE-C- 829 096
- FR-A1- 2 938 726

## Description

L'invention relève du domaine des outils agricoles, en particulier des roues de travail en champs.

Ces roues sont utilisées pour travailler la terre, par exemple pour y former des sillons avant d'y déposer une semence ou une graine, après pour refermer les sillons ou encore pour tasser la terre. Elles peuvent également être utilisées en tant que roue de jauge pour régler la hauteur de travail d'outils voisins.

Génériquement, ces roues comprennent un corps de roue et une enveloppe généralement annulaire montée autour du corps de roue, en périphérie de celui-ci. Le corps de roue est réalisé de façon assez rigide, ce qui permet de transmettre les efforts nécessaires au travail de la terre. L'enveloppe est réalisée de manière telle qu'elle se déforme légèrement pendant le travail, ce qui évite son encrassement, notamment en favorisant un décollage de la terre. Le plus souvent, elle est fabriquée en élastomère. Elle s'utilise non gonflée, c'est-à-dire que l'intérieur de l'enveloppe se trouve en communication fluidique avec l'extérieur de celle-ci.

Classiquement, l'enveloppe présente un profil fermé : elle comprend une partie formant semelle, par l'intermédiaire de laquelle l'enveloppe est montée sur le corps de roue, une partie formant bande roulement, et deux parties formant flancs, qui relient chacune la semelle à la bande roulement. La semelle peut notamment inclure une portion qui fait saillie radialement vers l'intérieur, à la manière d'un talon. Ce talon est utilisé pour la fixation de l'enveloppe au corps de roue. En particulier, il peut être coincé entre deux flasques appartenant au corps de roue, par exemple montés l'un sur l'autre.

Globalement, les roues existantes fonctionnent de manière satisfaisante. Néanmoins, leur fabrication peut se révéler assez complexe.

La Demanderesse s'est fixé comme objectif d'améliorer la situation.

Selon l'invention, cet objectif est résolu par l'objet de la revendication 1.

De manière générale, la roue proposée est plus simple à fabriquer que les roues classiques.

En particulier, l'ouverture confère à l'enveloppe un profil ouvert qui simplifie grandement la fabrication de cette dernière. L'enveloppe peut être réalisée par moulage, avec des moules à injection de forme simple, contrairement aux enveloppes classiques à profil fermé. Ces dernières nécessitent des moules de forme complexe, combinés à des systèmes d'injection d'air sous pression ou de noyaux suspendus pour former une cavité interne. Les enveloppes classiques à profil fermé peuvent aussi être réalisées par extrusion/jonction. Elles doivent alors être fabriquées en combinant successivement de telles opérations. Les méthodes de fabrication classiques comprennent un nombre important d'opérations manuelles, pour lesquelles des précautions d'ordre sanitaire étaient nécessaires, précautions relatives notamment aux manipulations de substances nuisibles à la santé, aux températures et à la pénibilité.

Ici, la matière première peut être simplement répartie dans les moules au moyen d'injecteurs usuels ou par gravité. La reproductibilité est améliorée. En particulier, les tolérances sur l'épaisseur des enveloppes sont mieux maîtrisées.

Pratiquement toute la surface du moule au contact de la matière première peut être aisément portée à une température souhaitée, qui dépend des propriétés des matières utilisées. Ceci est, au contraire, difficile, voire impossible, avec une enveloppe de profil fermé, pour laquelle il faut prévoir un noyau. Il en résulte une température plus homogène de la matière, obtenue plus rapidement, ce qui accélère les étapes de chauffage/refroidissement pour la cuisson, la polymérisation et/ou la réticulation, dont la vulcanisation. Pour les mêmes raisons, le retour à température ambiante de l'enveloppe en fin de processus est également plus rapide et plus homogène.

Le profil ouvert de l'enveloppe facilite son démoulage. On peut utiliser la déformabilité et l'élasticité de l'enveloppe afin d'extraire une partie du moule au travers de l'ouverture de l'enveloppe. En pratique, le démoulage peut se faire manuellement.

Le matériau souple, tel qu'un élastomère, utilisé pour fabriquer l'enveloppe est généralement plus coûteux que les matériaux des pièces rigides du corps de roue. L'absence de semelle dans l'enveloppe de la roue proposée permet une économie de matière première par rapport aux enveloppes classiques.

Le cycle de fabrication de la roue proposée est raccourci, et son coût généralement réduit.

Selon un autre aspect, la Demanderesse propose un kit selon la revendication 9.

La roue et le kit peuvent présenter les caractéristiques optionnelles suivantes, seules ou en combinaison les unes avec les autres :
- L'un au moins des flancs est verrouillé par un flasque respectif par coopération de forme. Le risque que l'enveloppe se détache des flasques et de l'entretoise en fonctionnement est alors réduit. La coopération de forme s'oppose à un mouvement de l'enveloppe, en particulier selon la direction radiale, par rapport aux flasques et à l'entretoise. Au cours des opérations d'assemblage, la coopération de forme facilite le positionnement et l'indexage de l'enveloppe par rapport aux flasques et à l'entretoise.
- L'un au moins des flancs de l'enveloppe comprend une lèvre au voisinage de l'ouverture, et l'un au moins des flasques et de l'entretoise comprend une cavité agencée en coopération de forme avec la lèvre. Le lèvre renforce l'extrémité libre du flanc qui la porte et limite les risques de détérioration, d'usure ou de déchirure aussi bien lors de la fabrication que lors de son utilisation. La lèvre peut prendre la forme d'un jonc.
- L'entretoise comprend une partie active disposée, hors charge, à proximité de la bande de roulement sous celle-ci. L'enveloppe et la partie active sont mutuellement agencées de sorte que, sous charge, la bande de roulement s'affaisse et vienne épouser la forme de la partie active sous-jacente. La bande de roulement forme alors des empreintes dans le sol qui correspondent sensiblement à la forme de la partie active. Il est généralement plus facile de fabriquer l'entretoise rigide avec des formes complexes que de réaliser des formes similaires en surface extérieure de l'enveloppe souple. Des enveloppes similaires peuvent être utilisées avec des entretoises de forme différente pour créer des roues aux fonctions variées. Autrement dit, la fabrication en grand nombre d'enveloppes identiques peut suffire à équiper différentes roues. L'enveloppe se déforme chaque fois qu'elle est compressée par l'entretoise et chaque fois que l'entretoise s'éloigne. Lors du roulage dans de la terre collante, ces déformations facilitent le décollage de la terre de la surface extérieure de l'enveloppe.
- La partie active présente une section de l'une des formes parmi :
   i) un dôme présentant un axe de symétrie perpendiculaire à un axe de rotation de la roue, et
   ii) deux dômes reliés entre eux par une cavité et présentant un axe de symétrie perpendiculaire à un axe de rotation de la roue. En fonction de la forme mise en oeuvre, il est possible de former un sillon ou deux sillons au passage d'une seule roue. En fonction des circonstances, l'utilisateur peut interchanger des entretoises de différente forme en réutilisant les mêmes flasques et/ou la même enveloppe.
- La partie active présente une section de forme asymétrique. Les roues de ce type peuvent alors être utilisées dans un montage incluant une paire de roues, par exemple pour travailler la terre de part et d'autre d'un sillon. Les roues de ce types peuvent être montées à rotation autour d'un axe sensiblement incliné par rapport à la verticale et/ou sensiblement non perpendiculaire à la direction d'avancée de la machine agricole.
- La partie active présente une section qui varie. L'effet produit sur la terre varie le long de l'avancée d'une telle roue. La pression exercée sur l'enveloppe par l'entretoise est discontinue le long de la circonférence. Des portions de la bande de roulement de l'enveloppe présentent, en fonctionnement, une liberté de mouvement. Des contraintes subies par l'enveloppe peuvent alors être libérées plus facilement et les risques de détérioration sont réduits.
- Les flancs et la bande de roulement présentent des épaisseurs similaires l'une à l'autre. À l'exception d'éventuelles formes destinées à verrouiller la fixation de l'enveloppe, les flancs et la bande de roulement peuvent présenter un aspect sensiblement continu. Lorsque qu'une opération de chauffage et/ou de refroidissement est mise en oeuvre pour fabriquer l'enveloppe, la diffusion thermique au sein du matériau constituant l'enveloppe est rapide et homogène. La durée des cycles de production et les coûts de fabrication sont encore réduits.

D'autres caractéristiques, détails et avantages de l'invention apparaîtront à la lecture de la description détaillée ci-après, et des dessins annexés, sur lesquels :
- la figure 1 montre une vue en perspective d'une roue selon l'invention au repos ;
- la figure 2 montre une vue de côté de la roue de la figure 1 ;
- la figure 3 montre une vue en coupe de la roue de la figure 1 ;
- la figure 4 montre une vue similaire à celle de la figure 1 sur laquelle l'enveloppe est absente ;
- la figure 5 montre une vue similaire à celle de la figure 2 sur laquelle l'enveloppe est absente ;
- la figure 6 montre une vue similaire à celle de la figure 3 sur laquelle l'enveloppe est absente ;
- la figure 7 montre une vue éclatée et en perspective de l'objet de la figure 4 ;
- la figure 8 montre une vue éclatée et de face de l'objet de la figure 4 ;
- les figures 9 et 10 montrent des vues de détail et en coupe de deux variantes de la roue de la figure 1 ;
- la figure 11 montre une vue en coupe de la roue de la figure 1 en fonctionnement ;
- la figure 12 montre une vue en coupe d'une roue selon l'invention au repos ;
- la figure 13 montre une vue en coupe d'une roue selon l'invention en fonctionnement ;
- les figures 14 et 15 montrent des vues de détail et en coupe de deux roues selon l'invention ;
- la figure 16 montre une vue en coupe de la roue de la figure 14 en fonctionnement ;
- la figure 17 montre une vue en coupe d'une paire de roues similaires à celle des figures 14 et 16 en fonctionnement dans un montage en « V » ;
- la figure 18 montre une vue en perspective d'une roue selon l'invention sur laquelle l'enveloppe est absente ;
- la figure 19 montre une vue en coupe de la roue de la figure 18 en fonctionnement et sur laquelle l'enveloppe est présente ;
- la figure 20 montre une vue en perspective d'une roue selon l'invention sur laquelle l'enveloppe est absente ;
- la figure 21 montre une vue en coupe de la roue de la figure 20 en fonctionnement et sur laquelle l'enveloppe est présente ;
- la figure 22 montre une vue de côté d'une roue similaire à celles des figures 18 à 21 ;
- la figure 23 montre une vue de détail et de côté d'une roue similaire à celles des figures 18 à 21 en fonctionnement ;
- la figure 24 montre une vue de côté d'une variante de la roue de la figure 20 sur laquelle l'enveloppe est absente ; et
- la figure 25 montre une vue éclatée et en perspective de la roue de la figure 24.

Les dessins et la description ci-après contiennent, pour l'essentiel, des éléments de caractère certain en support des revendications. Ils pourront donc non seulement servir à mieux faire comprendre la présente invention, mais aussi contribuer à sa définition, le cas échéant. Il est relevé que des éléments comme la géométrie des roues sont difficiles à définir complètement, autrement que par le dessin.

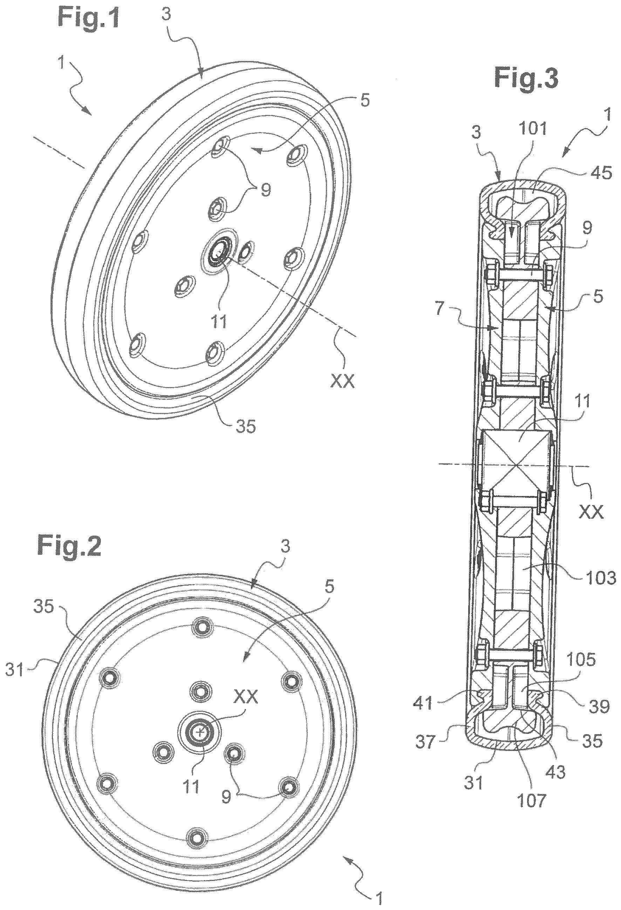

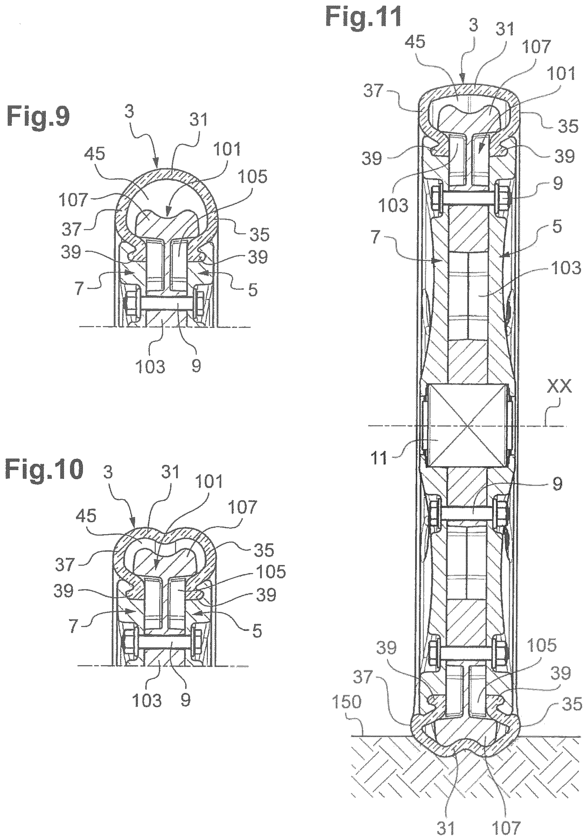

Les figures 1 à 11 montrent un premier mode de réalisation d'une roue 1 de travail en champs. Les figures 9 et 10 représentent deux variantes du premier mode de réalisation. La roue 1 comprend une enveloppe 3, une paire de flasques 5, 7, des fixations 9, un ensemble de roulement 11 et une entretoise 101. À l'état monté sur une machine agricole, la roue 1 présente un axe de rotation représenté par un trait tireté et la référence XX sur les figures.

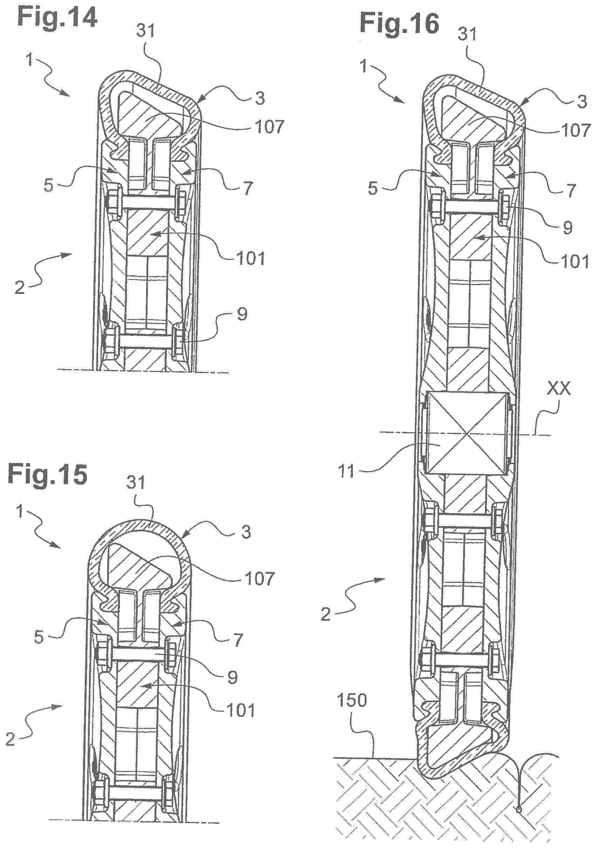

La roue 1 présente un plan médian perpendiculaire à l'axe de rotation XX. Le plan médian constitue un plan de symétrie de la roue 1 à quelques exceptions près. Par exemple, les fixations 9 et la forme de biseau visible en figures 14 à 17 forment des exceptions à la symétrie.

Dans l'exemple décrit ici, les deux flasques 5 et 7 sont similaires l'un à l'autre et le symétrique l'un de l'autre selon le plan médian. Chaque flasque 5, 7 présente une forme générale de disque avec une face intérieure et une face extérieure. L'entretoise 101 présente également une forme générale de disque et présente deux faces principales similaires l'une de l'autre.

Dans des variantes, d'autres parties telles que les flasques 5, 7, l'enveloppe 3 et/ou l'entretoise 101 peuvent présenter une asymétrie par rapport au plan médian.

Chacun des flasques 5, 7 présente, en son centre, une ouverture traversante de la face extérieure à la face intérieure. L'ouverture présente un contour sensiblement circulaire. L'entretoise 101 présente, en son centre, une ouverture traversante de l'une à l'autre de ses faces principales. L'ouverture présente un contour sensiblement cylindrique. Chacun des flasques 5, 7 et de l'entretoise 101 présente des passages traversants de l'une à l'autre de ses faces pour les fixations 9.

Dans un état assemblé, les faces intérieures des flasques 5, 7 sont respectivement montées contre l'une et l'autre des deux faces principales de l'entretoise 101. L'entretoise 101 est prise en sandwich entre les deux flasques 5, 7. Les ouvertures centrales sont alignées les unes avec les autres selon l'axe de rotation XX. Les passages traversants de l'entretoise 101 pour les fixations 9 sont alignés avec les passages traversants correspondant de chacun des deux flasques 5, 7.

Les deux flasques 5, 7 et l'entretoise 101 sont maintenus ensemble au moyen des fixations 9 disposées dans les passages prévus à cet effet. Ici, les fixations 9 comprennent des couples vis-écrou. La tête de la vis et l'écrou correspondant sont en appui contre la face extérieure de l'un ou l'autre des deux flasques 5, 7, sur le contour des passages traversants. L'ensemble formé par les deux flasques 5, 7, l'entretoise 101 et les fixations 9 peut être vu comme un corps de roue 2.

Le corps de roue 2 ainsi formé présente une ouverture traversante centrée sur l'axe de rotation XX. Les parties du corps de roue 2 entourant l'ouverture forment un moyeu de la roue 1. Cette ouverture est conformée en un logement ouvert apte à accueillir l'ensemble de roulement 11.

Sur les figures en coupe, l'ensemble de roulement 11 est schématisé par une croix. Chacun des flasque 5, 7 comprend, du côté de sa face extérieure, un rebord sensiblement annulaire faisant radialement saillie vers l'intérieur par rapport à l'alésage de l'ouverture centrale de l'entretoise 101. Chacun de ces rebords forme une butée axiale pour l'ensemble de roulement 11 de manière à limiter son coulissement selon la direction axiale XX et à le maintenir entre les deux flasques 5, 7. Ici, le logement prévu pour accueillir l'ensemble de roulement 11 est adapté pour loger un ensemble de roulement 11, ou bloc de roulement, connu en tant que tel. L'ensemble de roulement 11 se présente sous la forme d'une cartouche prête à être installée dans le corps de roue 2. L'ensemble de roulement 11 présente un alésage centré sur l'axe de rotation XX et débouchant de chaque côté du corps de roue 2. L'alésage de l'ensemble de roulement 11 est agencé pour être enfilé sur un essieu de machine agricole.

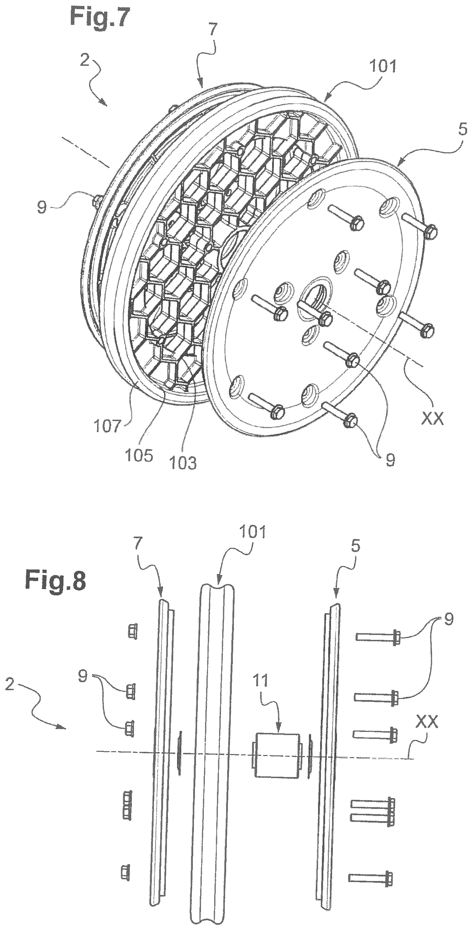

Dans l'exemple décrit ici, l'entretoise 101 comprend une partie centrale 103, une partie intermédiaire 105 et, en sa périphérie, une partie active 107. Outre l'ouverture centrale et les ouvertures pour les fixations 9, la partie centrale 103 de l'entretoise 101 est en grande partie évidée. Comme cela apparaît en figure 7, la partie centrale 103 présente une configuration en nid d'abeilles. La structure en nid d'abeilles s'ouvre dans l'une et l'autre des faces principales de l'entretoise 101. Une telle structure confère à l'entretoise 101 une bonne résistance mécanique en fonctionnement tout en présentant une faible masse.

Dans des variantes qui ne font pas partie de l'invention, l'entretoise 101 est dépourvue de partie centrale 103 et présente une forme générale d'anneau. Dans ce cas, les flasques 5, 7 sont montés directement l'un contre l'autre, ou par l'intermédiaire d'une ou plusieurs pièces intercalaires supplémentaires. Dans des variantes, la partie centrale 103 est pleine ou partiellement évidée.

La partie intermédiaire 105 de l'entretoise 101 est fixée entre les flasques 5, 7 au voisinage d'une bordure périphérique de chacun des flasques 5, 7. Dans l'exemple décrit ici, la partie active 107 de l'entretoise 101 fait saillie radialement vers l'extérieur par rapport aux bordures périphériques respectives des flasques 5, 7. Dans des variantes qui ne font pas partie de l'invention, la partie active 107 est absente. Dans ce cas, la partie intermédiaire 105 présente une bordure périphérique sensiblement alignée avec des bordures périphériques respectives des flasques 5, 7 ou en retrait des bordures périphériques respectives des flasques 5, 7.

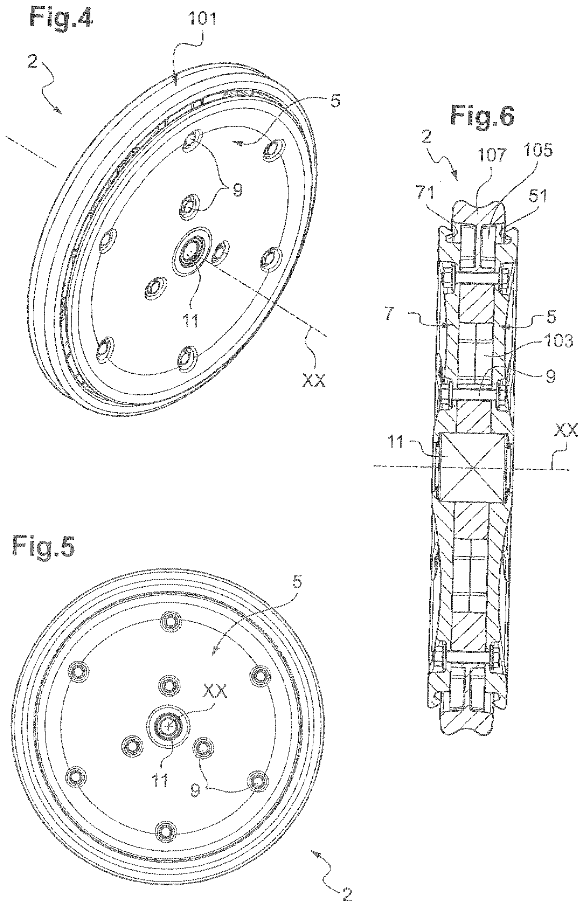

Chaque flasque 5, 7 comprend ici une cavité 51, 71 respective. Chacune des cavités 51, 71 prend la forme d'une rainure ménagée sensiblement le long de la périphérie du flasque 5, 7 correspondant. Chacune des cavités 51, 71 est ménagée depuis la face intérieure du flasque 5, 7 correspondant. Dans l'état assemblé représenté aux figures 4 à 6, les deux cavités 51, 71 s'ouvrent sensiblement en regard l'une de l'autre. La bordure périphérique de chacun des flasques 5, 7 entourant la cavité 51, 71 respective forme un crochet de retenue pour l'enveloppe 3.

Selon l'invention, les flasques 5, 7 et l'entretoise 101 sont réalisés à base d'un matériau rigide, sensiblement indéformable. Par exemple, ici, des matériaux métalliques. En variante des matières plastiques peuvent être utilisées comme des polyamides ou des polypropylènes chargés en fibres de verre. Dans ce contexte, les termes "rigide" et "indéformable" visent à distinguer le corps de roue 2, comprenant les flasques 5, 7 et l'entretoise 101, de l'enveloppe 3 plutôt souple et déformable. L'entretoise 101 est en variante réalisée en un matériau plus rigide que celui de l'enveloppe 3 mais plus souple que celui des flasques 5, 7. Ceci permet d'absorber certains chocs, en particulier lorsque la roue 1 fonctionne à des vitesses élevées sur des terrains accidentés. Par exemple, des caoutchoucs à haute dureté peuvent être utilisés.

Dans l'exemple décrit ici, chacun des flasques 5, 7 est réalisé d'une seule pièce. L'entretoise 101 est réalisée aussi d'une seule pièce.

L'enveloppe 3 présente une forme généralement annulaire. L'enveloppe 3 comprend deux parties formant flancs 35, 37 et une partie formant bande de roulement 31 reliant les flancs 35, 37 entre eux. L'enveloppe 3 est ici réalisée d'un seul tenant.

L'enveloppe 3 est dépourvue de semelle. L'enveloppe 3 présente une ouverture 43 opposée à la bande de roulement 31. Vue de profil et tel que cela est représenté aux figures 3, 9, 10 et 11, l'enveloppe 3 présente une section transversale en forme générale de « U ».

Ici, l'enveloppe 3 comprend deux lèvres 39, 41. Les lèvres 39, 41 sont conformées dans une portion d'extrémité libre du flanc 35, respectivement 37, opposée à la bande de roulement 31. Les lèvres 39, 41 de l'enveloppe 3 sont disposées à proximité de l'ouverture 43, ici de part et d'autre de l'ouverture 43. Les lèvres 39, 41 forment des surépaisseurs par rapport au reste des flancs 35, 37. Les lèvres 39, 41 font saillie du flanc 35, respectivement 37, selon la direction de l'axe de rotation XX vers l'extérieur de l'enveloppe 3, c'est-à-dire dans des sens opposés l'une par rapport à l'autre.

Dans l'exemple décrit ici, l'enveloppe 3, à l'exception des lèvres 39, 41, présente une épaisseur sensiblement uniforme. Les flancs 35, 37 et la bande de roulement 31 présentent des épaisseurs similaires les unes aux autres. En variante, les épaisseurs peuvent être différentes. Par exemple, la bande de roulement 31 peut être plus épaisse que les flancs 5, 7.

Les lèvres 39, 41 de l'enveloppe 3 et les cavités 51, 71 des flasques 5, 7 sont conformées pour coopérer deux-à-deux.

Dans un état assemblé de la roue 1 représenté sur les figures 1 à 3, l'enveloppe 3 est maintenue par le corps de roue 2. L'entretoise 101 du corps de roue 2 est disposée en travers de l'ouverture 43 de l'enveloppe 3. Les flasques 5, 7 sont agencés de manière à bloquer chacun un flanc 35, 37 respectif au voisinage de l'ouverture 43 en appui contre l'entretoise 101 et de manière à maintenir ensemble l'enveloppe 3 et l'entretoise 101.

Chaque lèvre 39, 41 de l'enveloppe 3 est logée dans la cavité 51, respectivement 71, des flasques respectifs 5, 7. Autrement dit, une partie du flanc 35 de l'enveloppe 3 est pincée en sandwich entre le flasque 5 et la partie intermédiaire 105 de l'entretoise 101, tandis qu'une partie du flanc 37 est pincée en sandwich entre le flasque 7 et la partie intermédiaire 105 de l'entretoise 101. Les fixations 9 maintiennent un serrage sensiblement selon la direction de l'axe de rotation XX. L'entretoise 101 est prise en étau entre les deux flasques 5, 7 au moins en partie par l'intermédiaire des flancs 35, 37 de l'enveloppe 3.

Ici, la coopération de forme des lèvres 39, 41 de l'enveloppe 3 et des cavités 51, 71 des flasques 5, 7 permettent d'améliorer le maintien par verrouillage. Le risque d'un écartement localisé et accidentel de l'enveloppe 3 selon une direction radiale par rapport au corps de roue 2 est réduit.

Dans des variantes, la position des lèvres et des cavités est inversée : les flasques 5, 7 présentent une forme convexe, ou mâle, tandis que les flancs 35, 37 de l'enveloppe 3 présentent une forme concave, ou femelle correspondante. Dans des variantes, les cavités 51,71 sont ménagées dans la partie intermédiaire 105 de l'entretoise 101, tandis que les lèvres 39, 41 de l'enveloppe 3 sont orientées en vis-à-vis l'une de l'autre pour s'insérer dans les cavités 51, 71.

Dans des variantes, les flancs 35, 37 de l'enveloppe 3 sont dépourvus de lèvres 39, 41. Les flasques 5, 7 sont dépourvus de cavités 51, 71. Le verrouillage par coopération de forme est absent. Dans ces cas, les parties des flancs 35, 37 de l'enveloppe 3 au voisinage de l'ouverture 43 sont maintenues entre les deux flasques 5, 7 par le serrage orienté selon la direction de l'axe de rotation XX. Un serrage suffisant et les forces de frottement entre l'enveloppe 3 et le corps de roue 2 permettent d'éviter un décrochage de l'enveloppe 3 depuis le corps de roue 2.

Les coopérations de forme présentées jusqu'ici sont sensiblement symétriques selon le plan médian perpendiculaire à l'axe de rotation XX. Il peut en être autrement. L'enveloppe 3 et/ou le corps de roue 2 peut présenter une asymétrie selon le plan médian.

L'enveloppe 3 présente une configuration et une composition qui la rendent déformable. L'enveloppe 3 est réalisée à base d'un matériau élastomère, ici du polyuréthane. Le polyuréthane présente de bonnes performances en déformation et une bonne tenue dans le temps. Le polyuréthane présente, en outre, un caractère hydrophile plus important que celui d'autres élastomères tels que le caoutchouc. Ce caractère hydrophile permet à la fois de faciliter les opérations de démoulage lors de la fabrication et aussi de faciliter le décollage de la terre en cours de fonctionnement. En combinaison avec la configuration de l'enveloppe 3, l'utilisation de polyuréthane permet d'améliorer les performances en fonctionnement tout en limitant les coûts en fabrication. En variante, du caoutchouc peut être utilisé. Les dimensions de l'enveloppe 3, et en particulier son épaisseur, sont choisies de manière à permettre une déformation manuelle de l'enveloppe 3. Par exemple, l'ouverture 43 peut être agrandie en écartant les flancs 35, 37 l'un de l'autre, selon la direction de l'axe de rotation XX à la seule force manuelle. Les opérations de démoulage et d'assemblage de la roue 1 s'en trouvent facilitées.

De manière générale, l'enveloppe 3 peut être réalisée au moyen de techniques connues en tant que telles dans le domaine des pneumatiques. L'enveloppe 3 est, ici, réalisée par moulage. À l'état démonté, et comme cela apparaît en figure 3, le profil de l'enveloppe 3 définit un espace intérieur 45. L'espace intérieur 45 est délimité, selon une direction radiale, entre la bande de roulement 31 et l'ouverture 43. L'espace intérieur 45 est délimité, selon une direction axiale, entre les flancs 35, 37. À l'état démonté, l'espace intérieur 45 est en communication avec l'extérieur par l'intermédiaire de l'ouverture 43. Lors du moulage, l'espace intérieur 45 est formé au moyen d'une partie convexe correspondante d'un moule. Après moulage, la partie convexe du moule est extraite de l'espace intérieur 45 de l'enveloppe 3. La dimension maximale de l'espace intérieur 45 selon la direction axiale XX est, ici, supérieure à la dimension de l'ouverture 43 selon la direction axiale XX. Pour extraire la partie convexe du moule occupant l'espace intérieur 45 par l'ouverture 43, on déforme l'enveloppe 3. Plus l'enveloppe 3 est déformable élastiquement, plus l'ouverture 43 peut être élargie et le démoulage facilité.

L'épaisseur sensiblement uniforme de l'enveloppe 3 facilite l'homogénéité du chauffage/refroidissement lors du moulage. La propagation de l'énergie thermique en provenance du moule et se propageant dans la matière constituant l'enveloppe 3 est facilitée. Selon un autre point de vue, chaque partie constituant l'enveloppe 3 est située à faible distance d'une surface extérieure et donc à proximité d'une surface du moule dont la température est contrôlée. La propagation thermique jusqu'au coeur de la matière, et donc la thermalisation, est rapide. Le risque de voir apparaître des portions de l'enveloppe 3 présentant une réticulation incomplète est réduit.

Comme cela apparaît en figure 3, l'espace intérieur 45 de l'enveloppe 3 à l'état monté en roue 1 est, ici, partiellement occupé par la partie active 107 de l'entretoise 101.

Un exemple de montage de la roue 1 est maintenant décrit sur la base des figures 7 et 8. Dans un premier temps, l'entretoise 101 est insérée au moins en partie par l'ouverture 43 dans l'espace intérieur 45 de l'enveloppe 3. Comme cela est visible en figure 3, la dimension maximale de la partie active 107 de l'entretoise 101 selon la direction axiale XX peut être supérieure à la dimension minimale de l'ouverture 43 de l'enveloppe 3 au repos, selon la direction axiale XX. Par conséquent, insérer l'entretoise 101 dans l'espace intérieur 45 de l'enveloppe 3 nécessite d'élargir l'ouverture 43 de l'enveloppe 3. Pour ce faire, les flancs 35, 37 sont écartés l'un de l'autre en jouant sur la déformabilité et l'élasticité de l'enveloppe 3. Le diamètre extérieur de l'entretoise 101 est supérieur au diamètre intérieur de l'enveloppe 3 au repos. Par conséquent, l'entretoise 101 est insérée dans l'enveloppe 3 en jouant sur la déformabilité et l'élasticité de l'enveloppe 3 selon des directions radiales. La configuration et la composition de l'enveloppe 3 sont sélectionnées de sorte que les opérations de montage puissent être réalisées à la main par un opérateur, éventuellement à l'aide d'outils.

Dans des variantes, l'entretoise 101 est constituée de plusieurs pièces assemblées les unes aux autres. Dans ce cas, l'entretoise 101 peut être insérée pièce par pièce dans l'espace intérieur 45 de l'enveloppe 3. Ensuite, les pièces sont assemblées fixement les unes avec les autres. Dans une première variante, l'entretoise 101 est réalisée par l'assemblage de plusieurs portions angulaires d'anneau. Par exemple deux, trois, quatre ou cinq portions angulaires forment les 360° de l'anneau. Dans une seconde variante, l'entretoise 101 est réalisée par l'assemblage de plusieurs sections annulaires assemblées entre elles selon des plans de jonction sensiblement perpendiculaires à l'axe de rotation XX. Par exemple deux, trois, quatre ou cinq sections annulaires forment la largeur de l'anneau. De telles configurations de l'entretoise 101 permettent, par exemple, de limiter ou de se dispenser d'une déformation élastique de l'enveloppe 3 lors du montage.

Une fois l'entretoise 101 installée à l'intérieur de l'enveloppe 3, les flasques 5, 7 sont rapprochés l'un de l'autre, de part et d'autre de l'enveloppe 3. Comme cela apparaît sur la figure 8, l'ensemble de roulement 11 est disposé entre les deux flancs 5, 7 au cours de cette opération. Les flasques 5, 7 sont ensuite maintenus l'un vers l'autre au moyen des fixations 9, ici les couples vis-écrou. D'autres moyens de fixations peuvent être mis en oeuvre, par exemple des systèmes de clipsage ou de crochet.

Les figures 3, 9 et 10 représentent des modes de réalisation de roues 1 pour lesquels les entretoises 101 sont similaires les unes aux autres, tandis que les formes des enveloppes 3 au repos sont différentes les unes des autres. En figure 3, la bande de roulement 31 est faiblement bombée. En figure 9, la bande de roulement 31 présente une forme sensiblement semi-circulaire. En figure 10, la bande de roulement 31 présente une forme en double dôme.

Les formes de la bande de roulement 31 sont obtenues lors du moulage de l'enveloppe 3. La semelle 31 peut, en variante, présenter d'autres formes en fonction des applications souhaitées.

Au repos, la partie active 107 de l'entretoise 101 occupe seulement une partie de l'espace libre 45. Une portion de l'espace libre 45 de l'enveloppe 3 reste inoccupée, notamment sous la bande de roulement 31. Dans les modes de réalisation dépourvus de partie active 107, qui ne font pas partie de l'invention, l'espace libre 45 reste inoccupé. Dans les exemples décrits ici, l'espace intérieur 45 reste en communication fluidique avec l'extérieur de la roue 1, par exemple par l'intermédiaire d'un orifice dans l'entretoise 101 (non représenté). Par conséquent, l'espace intérieur 45 n'est ni gonflé, ni gonflable. L'absence de gonflage permet de faciliter la déformation de l'enveloppe 3 au cours du fonctionnement. La déformation de l'enveloppe 3 facilite le décollage de la terre qui pourrait s'accumuler sur la surface extérieure de l'enveloppe 3 au cours de son utilisation.

La figure 11 représente une vue en coupe transversale de la roue 1 en fonctionnement, c'est-à-dire en roulage sur un sol 150 meuble. La roue 1 de la figure 11 est sous contrainte. La partie active 107 est disposée à proximité sous la bande de roulement 31 dans la partie de la roue 1 qui n'est pas en contact avec le sol (en haut sur la figure 11).

Sous l'effet du poids de la roue 1 et d'une partie de la machine agricole, la partie active 107 de l'entretoise 101 logée dans l'espace libre 45 de l'enveloppe 3 vient s'appuyer contre une surface intérieure de la bande de roulement 31 dans la partie de la roue 1 en contact avec le sol (en bas sur la figure 11). La bande de roulement 31 est comprimée entre la partie active 107 de l'entretoise 101 et le sol 150. L'entretoise 101 et la partie active 107 sont mutuellement agencées de sorte que, sous charge, la bande de roulement 31 s'affaisse et vienne épouser la forme de la partie active 107. Dans l'exemple de la figure 11, la bande de roulement 31, vue en section transversale, prend la forme d'un double dôme. La surface du sol 150 est compressée et prend une forme complémentaire de celle de la partie active 107 de l'entretoise 101, via la bande de roulement 31. Des empreintes sont formées dans le sol 150.

La surface du sol 150 est travaillée en fonction de la forme de la partie active 107 de l'entretoise 101. La forme de la partie active 107 de l'entretoise 101 est adaptée en fonction des formes à créer dans le sol 150.

L'interposition de la bande de roulement 31 de l'enveloppe 3 entre la partie active 107 de l'entretoise 101 et le sol 150 permet d'éviter un contact direct entre l'entretoise 101 et la terre du sol 150. Lorsque la terre est collante, elle peut adhérer temporairement à l'enveloppe 3 sans entrer en contact avec l'intérieure de l'enveloppe 3 ou l'entretoise 101. Au cours du roulage, l'enveloppe 3 se déforme et reprend par exemple sa forme initiale représentée en partie haute de la figure 11. Les déformations successives facilitent le décollage de la terre qui peut avoir adhéré à l'enveloppe 3.

En figure 10, la forme de l'enveloppe 3 au repos est sensiblement ajustée à la forme de la partie active 107 de l'entretoise 101 qui lui est associée. Un tel ajustement permet de limiter les risques de pliage involontaires de l'enveloppe 3 lors du roulage. La détérioration de l'enveloppe 3 est limitée.

Les formes de l'enveloppe 3 représentées en figures 9 et 11 autorisent une plus grande distance entre la bande de roulement 31 au repos et la partie active 107. Ainsi, les mouvements de déformation de l'enveloppe 3 au cours du fonctionnement sont plus amples. Le décollage de la terre est amélioré.

Les formes des enveloppes 3 des figures 9 à 11 peuvent être combinées avec les entretoises 101 des figures suivantes, comme cela est représenté, par exemple, en figures 15, 19 et 21. L'adaptabilité d'entretoises aux formes différentes et d'enveloppes de formes différentes permet d'obtenir un nombre élevé de combinaisons. Chaque roue 1 ainsi créée peut présenter des fonctions et des caractéristiques qui lui sont propres. Ces combinaisons permettent également de proposer des roues 1 sous forme de kit en pièces détachées. Par exemple, une paire de flasques peut être proposée avec un jeu d'entretoises 101 et un jeu d'enveloppes 3. L'utilisateur peut combiner les pièces du kit à volonté. L'utilisateur peut ainsi choisir lui-même la combinaison adaptée à son besoin.

Dans le mode de réalisation des figures 1 à 11, la partie active 107 de l'entretoise 101 présente une section en forme de double-dôme. Deux dômes similaires sont reliés entre eux par une cavité. Cette forme présente un axe de symétrie correspondant au plan médian perpendiculaire à l'axe de rotation XX de la roue 1. Une telle forme permet de créer simultanément deux sillons sensiblement parallèles l'un de l'autre lors du roulage de la roue 1 sur le sol 150.

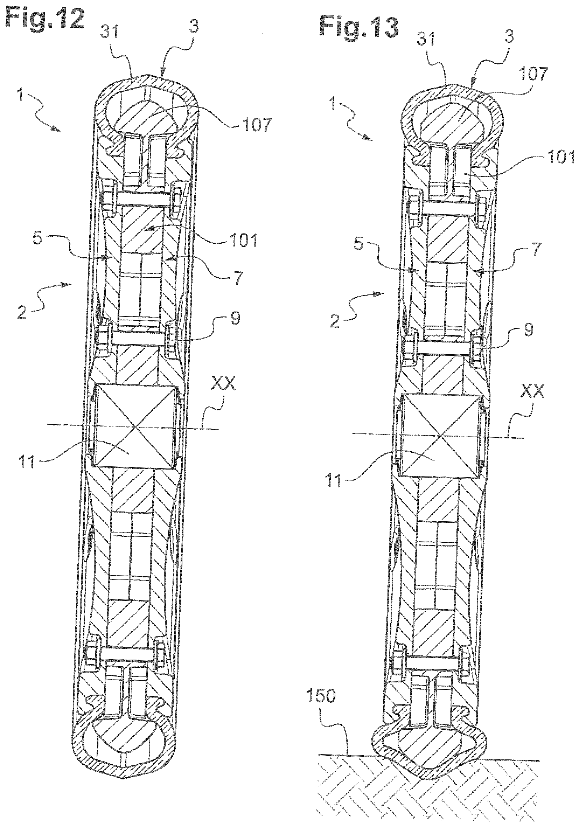

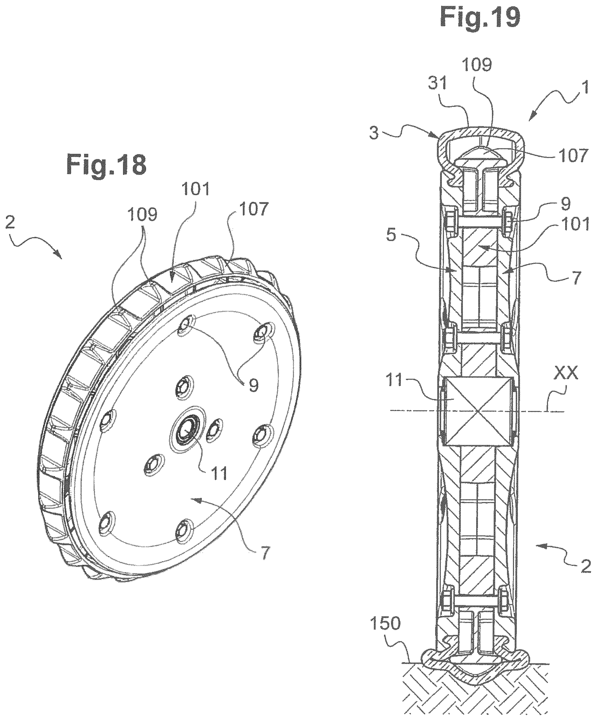

Dans les modes de réalisation des figures 12, 13, 18 et 19, la partie active 107 de l'entretoise 101 présente une section en forme de dôme ou de pointe. Cette forme présente un axe de symétrie correspondant au plan médian perpendiculaire à l'axe de rotation XX de la roue 1. Une telle forme permet de créer un sillon lors du roulage de la roue 1 sur le sol 150. L'entretoise 101 de la figure 13 présente un diamètre supérieur à celui de l'entretoise 101 de la figure 12, lui-même supérieur à celui de l'entretoise 101 des figures 18 et 19. L'écart entre la bande de roulement 31 au repos et la partie active 107 est légèrement supérieur sur la figure 13 par rapport à la figure 12, et supérieur sur la figure 12 par rapport à aux figures 18 et 19. Ceci permet de créer un sillon plus ou moins marqué, plus ou moins profond en fonction des besoins et en fonction de la dureté de la terre.

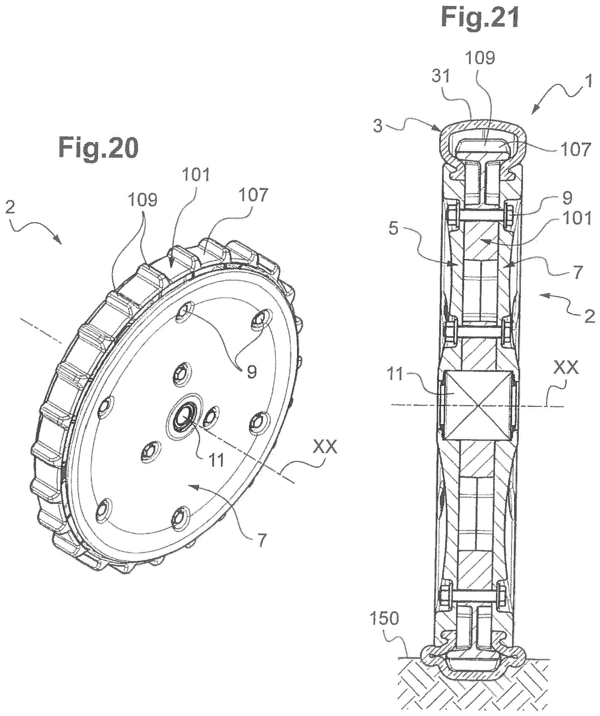

Dans les modes de réalisation des figures 20 et 21, la partie active 107 de l'entretoise 101 présente une section aplatie en son extrémité radiale. Cette forme présente un axe de symétrie correspondant au plan médian perpendiculaire à l'axe de rotation XX de la roue 1. Une telle forme permet d'aplatir ou de tasser la terre sur une largeur précise.

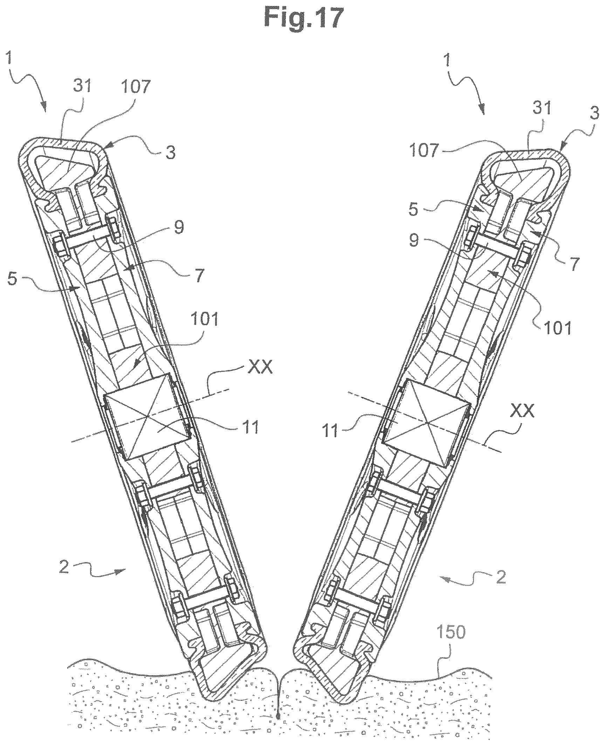

Dans les modes de réalisation des figures 14 à 17, la partie active 107 de l'entretoise 101 présente une section asymétrique. Ici, la forme rappelle celle d'un biseau ou d'une pointe asymétrique. Une telle forme permet, par exemple, de refermer un sillon. Comme cela est représenté en figure 16, en roulant à côté du sillon, la terre tend à être chassée latéralement pour refermer le sillon. Une roue 1 seule peut suffire à refermer un sillon. En variante, deux roues 1 peuvent rouler de part et d'autre du sillon pour refermer le sillon. Dans la variante représentée en figure 17, deux roues 1 similaires à celle de la figure 16 travaillent ensemble. Ici, les deux roues 1 sont le symétrique l'une de l'autre selon un plan verticale passant par le sillon à refermer. Les deux roues 1 sont montées en « V ». Autrement dit, les roues 1 ne sont pas disposées à la verticale mais au contraire orientées en partie vers le sol. Leur axe de rotation XX respectif est sensiblement incliné par rapport à l'horizontale. Ils forment par exemple un angle compris entre 5° et 15° avec l'horizontale. Le plan principal de chacune des roues 1 forme un angle compris entre 5° et 15° avec la verticale. Ainsi, la combinaison de l'inclinaison des roues 1 et de la forme des partie active 107 permet de fermer le sillon en ramenant la terre simultanément depuis chaque côté du sillon.

Dans des variantes combinables avec chacun des exemples de roues présentés ici, et en particulier ceux des figures 14 à 17, des roues 1 peuvent être montées par paire dans une configuration en « V » vue de dessus. Les roues 1 sont disposées selon un angle non nul par rapport à la direction d'avancée. Leur axe de rotation XX respectif est non perpendiculaire par rapport à la direction d'avancée. Les plans principaux des roues forment par exemple un angle compris entre 5° et 15° avec la direction d'avancée. Dans ce cas, l'un des flancs de l'enveloppe 3 pousse la terre. Un tel fonctionnement rappelle le fonctionnement d'une lame de chasse-neige.

Dans les modes de réalisation des figures 18 à 25, et contrairement aux figures 1 à 17, l'entretoise 101 présente une partie active 107 avec une section qui varie le long de la circonférence de la roue 1. En particulier, la forme active 107 en saillie des flasques 5, 7 est discontinue le long de la circonférence. Dans les exemples décrits ici, la surface périphérique de la partie active 107 de l'entretoise 101 est pourvue de dents 109.

Dans les exemples décrits ici, les dents 109 sont réparties de manière sensiblement équidistante les unes des autres le long de la circonférence. Pour chaque mode de réalisation, les dents 109 de la roue 1 sont identiques les unes aux autres. En variante, les dents 109 d'une entretoise 101 pourraient être différentes les unes des autres, par exemple configurées en une alternance d'au moins deux formes de dent différentes.

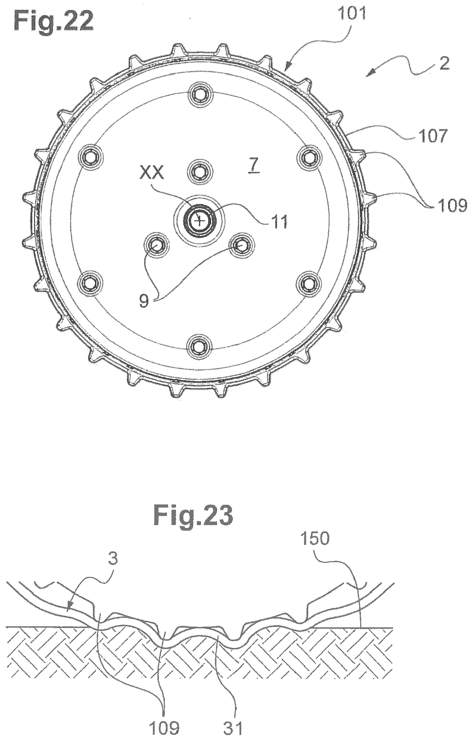

Une telle discontinuité permet de créer des empreintes dans le sol 150 qui varient le long de la direction d'avancée de la roue 1. Cet effet est représenté en figure 23. Dans les exemples décrits ici, la bande de roulement 31 de l'enveloppe 3 est sensiblement homogène le long de la circonférence. Par conséquent, la déformation de la bande de roulement 31 au cours du roulage dépend de la présence d'une dent 109 ou d'une zone dépourvue de dent 109. En fonctionnement, les parties de la bande de roulement 31 situées en regard d'une dent 109 sont pincées par celles-ci contre le sol 150. Les parties de la bande de roulement 31 situées en regard d'une zone dépourvue de dent 109 est libre de se déformer au contact du sol. Une telle discontinuité permet également de libérer les contraintes qui peuvent apparaître dans la bande de roulement 31. Les frottements et les phénomènes de cisaillage de la bande de roulement 31 entre le sol 150 et la partie active 107 de l'entretoise 101 sont limités. Les risques de dégradations de la bande de roulement 31 sont réduits.

Dans des variantes, l'enveloppe 3 présente des discontinuités le long de la circonférence, par exemple des crampons ou des creux.

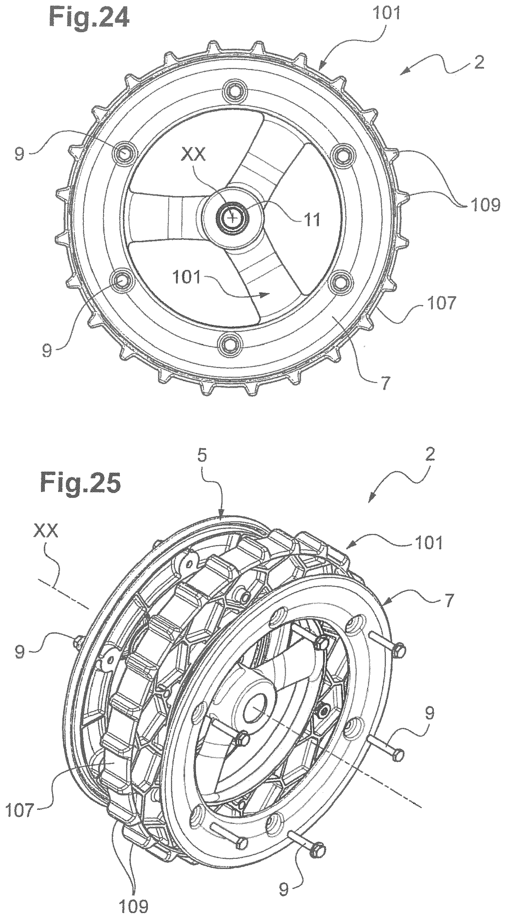

Dans le mode de réalisation des figures 24 et 25, la partie centrale 103 de l'entretoise 101 est en grande partie évidée. La partie centrale 103 comprend un moyeu relié à la partie intermédiaire 105 par des branches, ici au nombre de trois. En outre, les flasques 5, 7 présentent une forme généralement annulaire, évidée en son centre, comme cela apparaît en figure 25. Ici, le moyeu du corps de roue 2 est formé par l'entretoise 101 et non par les flasques 5, 7. Dans des variantes, un seul ou les deux flasques 5, 7 présentent une configuration similaire, c'est-à-dire avec une partie formant moyeu reliée à une partie périphérique. De tels flasques 5, 7 sont combinables avec l'entretoise 101 des figures 24 et 25 ou avec une entretoise 101 dépourvue de partie centrale 103.

De tels corps de roue 2 évidés permettent à la roue 1 de présenter une structure allégée. En outre, les ouvertures traversantes de la roue 1 permettent le passage d'air en cours de fonctionnement. Un tel corps de roue 2, présentant un voile de roue évidé, est peu sensible au vent latéral en fonctionnement. En outre, les ouvertures permettent d'augmenter l'accessibilité à des outils voisins de la machine agricole, par exemple pour effectuer de la maintenance ou du nettoyage sans avoir à démonter la roue 1 du reste de la machine.

L'entretoise 101 et les flancs 5, 7 évidés des figures 24 et 25 peuvent être combinés avec des entretoises 101 avec des parties actives 107 de forme variée ou même dépourvue de partie active 107.

L'invention ne se limite pas aux exemples de roues décrites ci-avant, seulement à titre d'exemple, mais elle englobe toutes les variantes que pourra envisager l'homme de l'art dans le cadre des revendications ci-après.

## Revendications

1. Outil agricole de type roue (1) de travail en champ comprenant :
- un corps de roue (2) comprenant une paire de flasques (5, 7), avec chacun une face intérieure et une face extérieure, et
- une enveloppe (3) non gonflée et non gonflable généralement annulaire comprenant deux parties formant flancs (35, 37) et une partie formant bande de roulement (31) reliant les flancs (35, 37) entre eux,
**caractérisée en ce que** l'enveloppe (3) présente une ouverture (43) opposée à la bande de roulement (31), et le corps de roue (2) comprend en outre au moins une partie formant une entretoise (101), l'entretoise (101) présentant une forme générale de disque et deux faces principales similaires l'une de l'autre, prises en sandwich entre les faces intérieures des flasques (5, 7), l'entretoise et les flasques sont réalisés à base d'un matériau rigide sensiblement indéformable tandis que l'enveloppe (3) est plutôt souple et déformable, l'entretoise étant réalisée d'une seule pièce avec une partie centrale (103) en nid d'abeille, une partie intermédiaire (105) et, en sa périphérie, une partie active (107),
et **en ce que** l'enveloppe (3) est montée sur le corps de roue (2) de manière que l'entretoise (101) soit disposée en travers de son ouverture (43), tandis que les flasques (5, 7) sont assemblés avec l'entretoise (101) pour former le corps de roue (2) et agencés de manière à bloquer les flancs (35, 37) de l'enveloppe (3) contre l'entretoise (101), au moins au voisinage de l'ouverture (43).

2. Roue (1) selon la revendication 1, dans laquelle l'un au moins des flancs (35 ; 37) est verrouillé par un flasque (5 ; 7) respectif par coopération de formes.

3. Roue (1) selon l'une des revendications précédentes, dans laquelle l'un au moins des flancs (35 ; 37) de l'enveloppe (3) comprend une lèvre (39 ; 41) au voisinage de l'ouverture (43), et l'un au moins des flasques (5 ; 7) et de l'entretoise (101) comprend une cavité (51) agencée en coopération avec la lèvre (71).

4. Roue (1) selon l'une des revendications précédentes, dans laquelle l'entretoise (101) comprend une partie active (107) disposée, hors charge, à proximité sous la bande de roulement (31), et sous celle-ci, tandis que l'enveloppe (3) et la partie active (107) sont mutuellement agencées de sorte que, sous charge, la bande de roulement (31) s'affaisse et vienne épouser la forme de la partie active (107), la bande de roulement (31) formant alors des empreintes dans le sol (150) qui correspondent sensiblement à la forme de la partie active (107).

5. Roue (1) selon la revendication 4, dans laquelle, la partie active (107) présente une section de l'une des formes parmi :
- un dôme présentant un axe de symétrie perpendiculaire à un axe de rotation (XX) de la roue (1), et
- deux dômes reliés entre eux par une cavité et présentant un axe de symétrie perpendiculaire à un axe de rotation (XX) de la roue (1).

6. Roue (1) selon la revendication 4, dans laquelle, la partie active (107) présente une section de forme asymétrique.

7. Roue (1) selon l'une des revendications 4 à 6, dans laquelle la partie active (107) présente une section qui varie.

8. Roue (1) selon l'une des revendications précédentes, dans laquelle les flancs (35 ; 37) et la bande de roulement (31) présentent des épaisseurs similaires les unes aux autres.

9. Kit destiné à former un outil agricole de type roue (1) de travail en champs comprenant :
- une paire de flasques (5, 7), avec chacun une face intérieure et une face extérieure, et
- une enveloppe (3) non gonflée et non gonflable généralement annulaire comprenant deux parties formant flancs (35, 37) et une partie formant bande de roulement (31) reliant les flancs (35, 37) entre eux, dans lequel l'enveloppe (3) présente une ouverture (43) opposée à la bande de roulement (31), le kit comprenant en outre au moins une partie formant une entretoise (101), l'entretoise (101) présentant une forme générale de disque et deux faces principales similaires l'une de l'autre, l'entretoise et les flasques étant réalisés à base d'un matériau rigide sensiblement indéformable tandis que l'enveloppe (3) est plutôt souple et déformable, l'entretoise étant réalisée d'une seule pièce avec une partie centrale (103) en nid d'abeille, une partie intermédiaire (105) et, en sa périphérie, une partie active (107), l'enveloppe (3) se montant sur un corps de roue (2) de manière que l'entretoise (101) soit disposée en travers de son ouverture (43), et les flasques (5, 7) s'assemblent avec l'entretoise (101) en la prenant en sandwich entre les faces intérieures des flasques (5, 7) pour former le corps de roue (2) de manière à bloquer les flancs (35, 37) de l'enveloppe (3) contre l'entretoise (101), au moins au voisinage de l'ouverture (43).

## Patentansprüche

1. Landwirtschaftliches Feldarbeitswerkzeug des Rad (1)-Typs, Folgendes aufweisend:
- einen Radkörper (2) mit einem Paar Flansche (5, 7) jeweils mit einer Innenseite und einer Außenseite, und
- einen allgemein ringförmigen nicht-aufgeblasenen und nicht-aufblasbaren Mantel (3) mit zwei Teilen, die Flanken (35, 37) bilden, und einem Teil, das eine Lauffläche (31) bildet, welche die Flanken (35, 37) miteinander verbindet,
**dadurch gekennzeichnet, dass** der Mantel (3) eine Öffnung (43) gegenüber der Lauffläche (31) aufweist, und der Radkörper (2) darüber hinaus mindestens ein Teil aufweist, das ein Distanzstück (101) bildet, wobei das Distanzstück (101) eine allgemeine Scheibenform und zwei einander ähnliche Hauptflächen aufweist, die zwischen den Innenflächen der Flansche (5, 7) sandwichartig angeordnet sind, das Distanzstück und die Flansche auf Basis eines starren, im Wesentlichen unverformbaren Material ausgeführt sind, während der Mantel (3) eher nachgiebig und verformbar ist, wobei das Distanzstück aus einem einzigen Stück mit einem wabenartigen Mittelteil (103), einem Zwischenteil (105) und an seinem Umfang einem aktiven Teil (107) hergestellt ist,
**und dass** der Mantel (3) so am Radkörper (2) angebracht ist, dass das Distanzstück (101) quer zu seiner Öffnung (43) angeordnet ist, während die Flansche (5, 7) mit dem Distanzstück (101) zusammengesetzt sind, um den Radkörper (2) so zu bilden, und so eingerichtet sind, dass sie die Flanken (35, 37) des Mantels (3) zumindest in der Nachbarschaft der Öffnung (43) am Distanzstück (101) arretieren.

2. Rad (1) nach Anspruch 1, wobei mindestens eine der Flanken (35; 37) durch einen jeweiligen Flansch (5; 7) durch Formschluss verriegelt ist.

3. Rad (1) nach einem der vorhergehenden Ansprüche, wobei mindestens eine der Flanken (35; 37) des Mantels (3) eine Lippe (39; 41) in der Nachbarschaft der Öffnung (43) aufweist, und zumindest einer der Flansche (5; 7) und des Distanzstücks (101) einen Hohlraum (51) aufweist, der in Zusammenwirkung mit der Lippe (71) angeordnet ist.

4. Rad (1) nach einem der vorhergehenden Ansprüche, wobei das Distanzstück (101) ein aktives Teil (107) aufweist, das bei Nichtbelastung im Nahbereich der Lauffläche (31) angeordnet ist und unter dieser angeordnet ist, während der Mantel (3) und das aktive Teil (107) gegenseitig so eingerichtet sind, dass sich unter Belastung die Lauffläche (31) absenkt und die Form des aktiven Teils (107) annimmt, wobei die Lauffläche (31) dann Abdrücke im Boden (150) bildet, die im Wesentlichen der Form des aktiven Teils (107) entsprechen.

5. Rad (1) nach Anspruch 4, wobei das aktive Teil (107) einen Querschnitt einer der Formen aufweist, darunter:
- eine Kuppel, die eine zur Rotationsachse (XX) des Rads (1) senkrechte Symmetrieachse aufweist, und
- zwei Kuppeln, die miteinander durch einen Hohlraum verbunden sind und eine zur Rotationsachse (XX) des Rads (1) senkrechte Symmetrieachse aufweisen.

6. Rad (1) nach Anspruch 4, wobei das aktive Teil (107) einen Querschnitt mit asymmetrischer Form aufweist.

7. Rad (1) nach einem der Ansprüche 4 bis 6, wobei das aktive Teil (107) einen Querschnitt aufweist, der variiert.

8. Rad (1) nach einem der vorhergehenden Ansprüche, wobei die Flanken (35; 37) und die Lauffläche (31) zueinander ähnliche Dicken aufweisen.

9. Bausatz, der dazu bestimmt ist, ein landwirtschaftliches Feldarbeitswerkzeug des Rad (1)-Typs zu bilden, Folgendes umfassend:
- ein Paar Flansche (5, 7) jeweils mit einer Innenseite und einer Außenseite, und
- einen allgemein ringförmigen nicht-aufgeblasenen und nicht-aufblasbaren Mantel (3) mit zwei Teilen, die Flanken (35, 37) bilden, und einem Teil, das eine Lauffläche (31) bildet, welche die Flanken (35, 37) miteinander verbindet, wobei der Mantel (3) eine Öffnung (43) gegenüber der Lauffläche (31) aufweist, wobei der Bausatz darüber hinaus mindestens ein Teil aufweist, das ein Distanzstück (101) bildet, wobei das Distanzstück (101) eine allgemeine Scheibenform und zwei einander ähnliche Hauptflächen aufweist, das Distanzstück und die Flansche auf Basis eines starren, im Wesentlichen unverformbaren Material ausgeführt sind, während der Mantel (3) eher nachgiebig und verformbar ist, wobei das Distanzstück aus einem einzigen Stück mit einem wabenartigen Mittelteil (103), einem Zwischenteil (105) und an seinem Umfang einem aktiven Teil (107) hergestellt ist, wobei sich der Mantel (3) so am Radkörper (2) anbringen lässt, dass das Distanzstück (101) quer zu seiner Öffnung (43) angeordnet ist, und sich die Flansche (5, 7) mit dem Distanzstück (101) zusammensetzen lassen, indem sie es sandwichartig zwischen den Innenflächen der Flansche (5, 7) nehmen, um den Radkörper (2) so zu bilden, dass die Flanken (35, 37) des Mantels (3) zumindest in der Nachbarschaft der Öffnung (43) am Distanzstück (101) arretiert sind.

## Claims

1. Wheel (1) type agricultural tool for working in the fields, comprising:
- a wheel body (2) comprising a pair of flanges (5, 7), each with an inner face and an outer face, and
- a generally annular non-inflated and non-inflatable casing (3) comprising two parts forming side walls (35, 37) and one part forming a tread (31) connecting the side walls (35, 37) to one another,
**characterised in that** the casing (3) has an opening (43) opposite to the tread (31), and the wheel body (2) further comprises at least one part forming a spacer (101), the spacer (101) having the general shape of a disc and two main faces similar to each other, sandwiched between the inner faces of the flanges (5, 7), the spacer and the flanges are made of a substantially non-deformable rigid material whereas the casing (3) is rather flexible and deformable, the spacer being made integrally with a honeycomb central part (103), an intermediate part (105) and in its periphery, an active part (107),
and **in that** the casing (3) is mounted on the wheel body (2) in such a way that the spacer (101) is positioned across its opening (43), whereas the flanges (5, 7) are assembled with the spacer (101) to form the wheel body (2) and arranged in such a way as to block the side walls (35, 37) of the casing (3) against the spacer (101), at least in the vicinity of the opening (43).

2. Wheel (1) according to Claim 1, in which at least one of the side walls (35; 37) is locked by a respective flange (5; 7) through collaboration of shapes.

3. Wheel (1) according to one of the preceding claims, in which at least one of the side walls (35; 37) of the casing (3) comprises a lip (39; 41) in the vicinity of the opening (43), and at least one of the flanges (5; 7) and of the spacer (101) comprises a cavity (51) arranged to collaborate with the lip (71).

4. Wheel (1) according to one of the preceding claims, in which the spacer (101) comprises an active part (107) arranged, when not loaded, near the tread (31) and under the latter, whereas the casing (3) and the active part (107) are arranged relative to one another in such a way that, under load, the tread (31) collapses and hugs the shape of the active part (107), the tread (31) then forming impressions in the ground (150) that correspond substantially to the shape of the active part (107).

5. Wheel (1) according to Claim 4, in which the active part (107) has a cross section of one of the shapes among:
- a dome having an axis of symmetry perpendicular to an axis of rotation (XX) of the wheel (1), and
- two domes joined together by a cavity and having an axis of symmetry perpendicular to an axis of rotation (XX) of the wheel (1).

6. Wheel (1) according to Claim 4, in which the active part (107) has a cross section of asymmetric shape.

7. Wheel (1) according to one of Claims 4 to 6, in which the active part (107) has a cross section that varies.

8. Wheel (1) according to one of the preceding claims, in which the side walls (35; 37) and the tread (31) have similar thicknesses to one another.

9. Kit intended to form a wheel (1) type agricultural tool for working in the fields comprising:
- a pair of flanges (5, 7), each with an inner face and an outer face, and
- a generally annular non-inflated and non-inflatable casing (3) comprising two parts forming side walls (35, 37) and one part forming a tread (31) connecting the side walls (35, 37) to one another, in which the casing (3) has an opening (43) opposite to the tread (31), the kit further comprising at least one part forming a spacer (101), the spacer (101) having the general shape of a disc and two main faces similar to each other, the spacer and the flanges are made of a substantially non-deformable rigid material whereas the casing (3) is rather flexible and deformable, the spacer being made integrally with a honeycomb central part (103), an intermediate part (105) and in its periphery, an active part (107),
the casing (3) mounting on a wheel body (2) in such a way that the spacer (101) is positioned across its opening (43), and the flanges (5, 7) assembling with the spacer (101) by sandwiching the latter between the inner faces of the flanges (5, 7) to form the wheel body (2) in such a way as to block the side walls (35, 37) of the casing (3) against the spacer (101), at least in the vicinity of the opening (43).
